# EUROPEAN PATENT APPLICATION

(11) **EP 4 431 441 A1**
(43) Date of publication of application: **18.09.2024**
(21) Application number: 23161717.6
(22) Date of filing: 14.03.2023
(51) Int. Cl.: B66D 1/58, B66D 5/02, G01L 5/00, G01L 1/24, F16C 19/52

(54) **A WINCH**

(71) Applicant: Damen 40 B.V., 4202 MS Gorinchem (NL)
(72) Inventor: Schuringa, Jasper Jaap, 3526 GE Utrecht (NL); Joosten, Wouter, 1095 JL Amsterdam (NL)
(74) Representative: De Vries & Metman

(57) **Abstract**

A winch (1) for a ship comprises a frame (2), a drum (3) which is mounted to the frame (2) through at least a bearing (5) and rotatable with respect to the frame (2) about an axis of rotation (X), a cable (4) which is wound around the drum (3) and a brake (6-8) for locking the drum (3) with respect to the frame (2). Under operating conditions a part of the cable (4) that extends outwardly from the drum (3) exerts a cable force (Fc1, Fc2) on the drum (3) and lies in a cable plane (P) which extends tangentially with respect to the drum (3), hence causing a torque about the axis of rotation (X) whereas the brake (6-8) exerts a counter torque on the drum (3). At least one of the frame (2) and the drum (3) is provided with a plurality of sensing probes (10) for determining local deformation of the at least one of the frame (2) and the drum (3), which sensing probes (10) are located at different angular locations around the axis of rotation (X).

## Description

The present invention relates to a winch for a ship, comprising a frame, a drum which is mounted to the frame through at least a bearing and rotatable with respect to the frame about an axis of rotation, a cable which is wound around the drum and a brake for locking the drum with respect to the frame, wherein under operating conditions a part of the cable that extends outwardly from the drum exerts a cable force on the drum and lies in a cable plane which extends tangentially with respect to the drum, hence causing a torque about the axis of rotation whereas the brake exerts a counter torque on the drum.

Such a winch is known in the prior art. The known winch is provided with a force measuring instrument between the frame and a deck of a ship onto which the frame is mounted. On the basis of the measured force the actual cable force is calculated. The distance between the cable plane and the axis of rotation may vary if the cable is wound around the drum by more than one cable layer, i.e. in case of a plurality of layer numbers. This means that even at a constant cable force the torque caused by the cable force may vary under operating conditions leading to inaccurate determination of the actual cable force.

An object of the invention is to provide an improved winch.

This object is accomplished with the winch according to the invention which is characterized in that at least one of the frame and the drum is provided with a plurality of sensing probes for determining local deformation of the at least one of the frame and the drum, which sensing probes are located at different angular locations around the axis of rotation.

An advantage of the invention is that the local deformations as detected by the sensing probes provide the opportunity to determine both a size and a direction of a resultant reaction force of the frame on the drum. This information appears to have an appropriate relationship with the cable force, which automatically takes into account the variation of the distance between the cable plane and the axis of rotation due to the presence of more than one cable layer. For example, this is advantageous under the following practical circumstances in case of a winch having a plurality of layer numbers. Sometimes the part of the cable which extends outwardly from the drum does not leave the drum exactly from the top of one lower layer number, but partly lies between two cable sections of the lower layer number, hence somewhat lower than on the top of a cable portion at one lower layer number. In other words, the cable does not always leave at a layer number which is a whole number.

The sensing probes may be accommodated in a separate annular element. The separate annular element may be prepared and mounted as a single unit to at least one of the frame and the drum.

In a practical embodiment the bearing comprises a roller bearing including an inner ring and an outer ring. Examples of rolling elements in the roller bearing are balls, cylindrical rollers, needle rollers, and tapered rollers. The plurality of sensing probes provides the opportunity to distinguish a local deformation peak at one of the sensors in the event that a rolling element is located at substantially the same angular position about the axis of rotation as one of the sensing probes.

In a particular embodiment the outer ring has a fixed position with respect to the frame and the inner ring has a fixed position with respect to the drum. For example, the drum is provided with a shaft to which the inner ring is fixed, whereas the outer ring is fixed to the frame. In this case the outer ring may be considered as part of the frame and the inner ring may be considered as part of the drum.

The annular element may be sandwiched between the outer ring of the roller bearing and the frame.

The sensing probes may comprise strain gauges.

Preferably, the sensing probes comprise optical strain gauges, since this type of sensing probes appears to be accurate and reliable.

The optical strain gauges may be integrated in an optical fibre. The optical strain gauges may comprise optical interference units, for example mirror-like units, wherein each interference unit modifies frequency of light that enters the interference unit via the optical fibre, depending on the deformation of the interference unit, and transfers the modified light via the optical fibre to a data processor for deriving the corresponding reaction force. Each of the interference units may operate in a different frequency range such that the data processor is able to distinguish the signals from the different interference units.

The sensing probes may be distributed evenly about the axis of rotation. It is also conceivable that the sensing probes are only applied along a limited angular section about the axis of rotation, for example within a range where under operating conditions the resultant reaction force acts. The range may be one or two quadrants, for example.

In an embodiment the bearing is a first bearing and the plurality of sensing probes comprises a first series of sensing probes located at different angular locations around the axis of rotation at the first bearing, wherein the drum is mounted to the frame through a second bearing which is located at a distance from the first bearing along the axis of rotation, wherein at least one of the frame and the drum is provided with a second series of sensing probes for determining local deformation of the at least one of the frame and the drum, which second series of sensing probes are located at different angular locations about the axis of rotation at the second bearing. In this case the cable force can be determined accurately since the cable may have different positions within the cable plane in a direction along the axis of rotation. In other words, under operating conditions the part of the cable may leave the drum at different positions in axial direction of the drum.

The first and second series of sensing probes may be similar and the first and second bearings may be similar.

The brake may comprise a friction band which at least partly surrounds a circular cylindrical portion of the drum.

In an embodiment the friction band is coupled to a rod which in turn is coupled to the frame so as to transfer a brake force from the friction band to the frame under operating conditions.

Alternatively, the winch may be electrically or hydraulically driven, such that the brake may also be operated electrically or hydraulically.

The invention will hereafter be elucidated with reference to very schematic drawings showing an embodiment of the invention by way of example.
Fig. 1 is a perspective view of an embodiment of a winch according to the invention.
Fig. 2 is a top view of the winch as shown in Fig. 1.
Fig. 2A is a sectional view of a part of the winch as shown in Fig. 2.
Fig. 3 is a side view of the winch as shown in Fig. 1.
Fig. 4 is a similar view as Fig. 3, illustrating forces under different operating conditions.

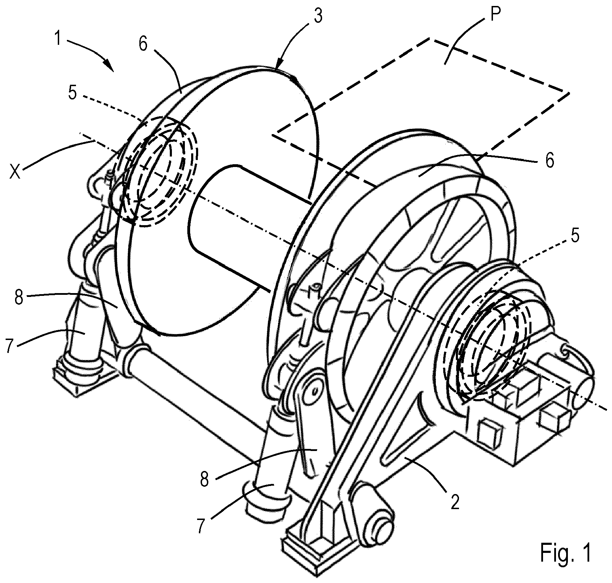

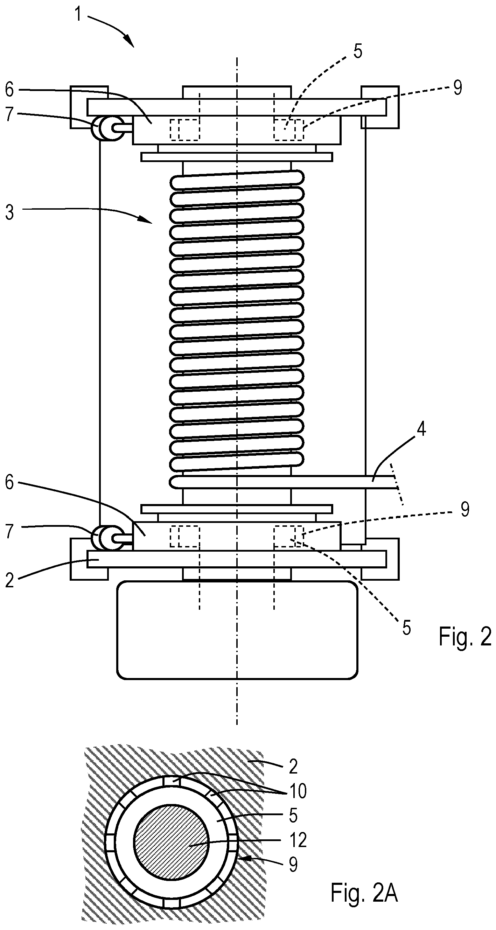

Figs. 1-3 show an embodiment of a winch 1 according to the invention. The winch 1 may be mounted on a deck of a ship (not shown), for example a tug boat, but it may be mounted on any platform in an alternative application. The winch 1 comprises a frame 2, a drum 3 and a cable 4. For clarity reasons the cable is not shown in Fig. 1. The drum 3 is mounted to the frame 2 through two roller bearings 5 and is rotatable with respect to the frame 2 about an axis of rotation X. Each of the roller bearings 5 has an inner ring and an outer ring. In this case, opposite axial sides of the drum 3 are provided with shaft portions 12 onto which the inner rings of the roller bearings 5 are mounted, see Fig. 2A. The outer rings are fixed to the frame 2. It is noted that an alternative embodiment may have different types of bearings than roller bearings.

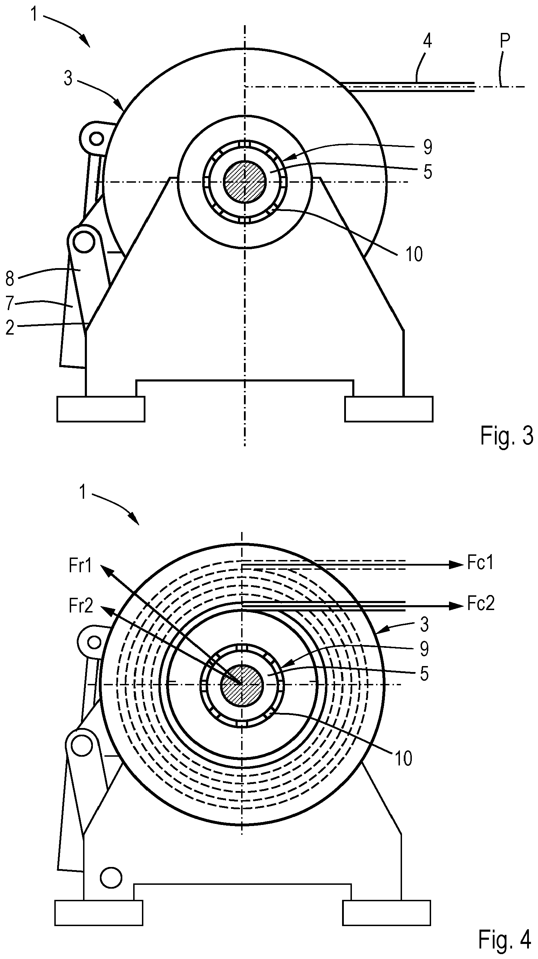

The cable 4 is wound around the drum 3 and under operating conditions a part of the cable 4 extends outwardly from the drum 3 and lies in a cable plane P which extends tangentially with respect to the drum 3, see Figs. 1 and 3. The cable 4 may have a plurality of layer numbers such that the height level of the cable plane P with respect to the axis of rotation X may vary under operating conditions. In the condition as shown in Fig. 3 the cable plane P extends horizontally. Under operating conditions the part of the cable 4 that extends outwardly from the drum 3 may lie in the cable plane P at different positions along the axis of rotation. It is also possible that the part of the cable 4 that extends outwardly from the drum 3 lies in the cable plane P by an acute angle to the axis of rotation X.

The winch 1 is provided with a brake in the form of two friction bands 6 which partly surround respective circular cylindrical portions of the drum 3 located at different positions along the axis of rotation X. The friction bands 6 can be clamped about the cylindrical portions of the drum 3 through respective hydraulic cylinders 7 in order to reduce or stop rotation of the drum 3 with respect to the frame 2. The winch 1 comprises two brake rods 8, which are pivotally coupled to the frame 2 and to the respective friction bands 6. Upon activating the hydraulic cylinders 7 the drum 3 can be locked to the frame 2.

Fig. 4 illustrates forces on the drum 3 under two different operating conditions. In both conditions the brake holds the drum 3 at a fixed rotational position with respect to the frame 2, but in a first operating condition the cable 4 leaves the drum at a larger distance from the axis of rotation X than in a second operating condition due to the different layer numbers. In the first and second operating conditions the cable 4 exerts equal cable forces Fc1 and Fc2 on the drum 3, respectively. This results in different torques about the axis of rotation X because of the different distances from the axis of rotation X at which the cable 4 leaves the drum 3. In each of the first and second operating conditions the respective friction bands 6 exert a resultant counter torque by exerting a resultant counter force on the drum 3, which resultant counter force is directed downwardly in this case due to the arrangement of the brake.

Referring again to Fig. 4, the cable forces Fc1 and Fc2 under two different operating conditions lead to two different resultant counter forces on the drum 3. As a consequence, the frame 2 exerts resultant reaction forces Fr1, Fr2 on the drum 3 at the roller bearings 5 under the respective operating conditions. Fig. 4 illustrates that reaction force Fr1 in response to the cable force Fc1 in the first operating condition is not only larger than reaction force Fr2 in response to the cable force Fc2 in the second operating condition, but it has also a different angle with respect to the frame 2. Conversely, this provides the opportunity to derive the actual cable force Fc1 or Fc2 when the size and direction of the reaction force Fr1 or Fr2, respectively, is known, i.e. without knowing the distance from the axis of rotation X where the cable 4 leaves the drum 3.

Referring to Fig. 2 it will be clear that each of the reaction forces Fr1 and Fr2 will be divided over the roller bearings 5, depending on the location of the cable 4 between the roller bearings 5 where the cable 4 leaves the drum 3.

It is noted that if the brake was arranged such that the resultant counter force also lies in the cable plane P the resultant reaction force would be zero.

In order to determine the size and direction of the reaction force Fr1, Fr2 so as to derive the corresponding cable force Fc1, Fc2 the frame 2 is provided with separate sensor rings 9 which surround the outer rings of the respective roller bearings 5, see Figs. 2, 2A, 3 and 4. They may be sandwiched between the outer rings of the respective roller bearings 5 or they may be fixed to the frame 2, for example accommodated in a groove in the frame 2. It is also conceivable that the sensor rings 9 are accommodated in grooves in the outer rings of the respective roller bearings 5. Each of the sensor rings 9 comprises an optical fibre which accommodates a plurality of optical strain gauges 10 for determining local deformation of the area around the respective optical strain gauges 10. The optical strain gauges 10 are located at equiangular distances from each other about the axis of rotation X, but this may be different in an alternative embodiment. The sensor rings 9 at both roller bearings 5 are the same in this case, but they may be different in an alternative embodiment.

Signals from the optical strain gauges 10 are processed by a data processor (not shown) to determine the resultant reaction force Fr1, Fr2 in order to derive the actual cable forces Fc1, Fc2. The step of data processing may comprise the step of determining a contact force vector using a mathematical model which describes the roller bearings 5.

The invention is not limited to the embodiment shown in the drawings and described hereinbefore, which may be varied in different manners within the scope of the claims and their technical equivalents. For example, the optical strain gauges may be replaced by alternative sensing probes, for example non-optical strain gauges, such as resistive foil strain gauges.

## Claims

1. A winch (1) for a ship, comprising a frame (2), a drum (3) which is mounted to the frame (2) through at least a bearing (5) and rotatable with respect to the frame (2) about an axis of rotation (X), a cable (4) which is wound around the drum (3) and a brake (6-8) for locking the drum (3) with respect to the frame (2), wherein under operating conditions a part of the cable (4) that extends outwardly from the drum (3) exerts a cable force (Fc1, Fc2) on the drum (3) and lies in a cable plane (P) which extends tangentially with respect to the drum (3), hence causing a torque about the axis of rotation (X) whereas the brake (6-8) exerts a counter torque on the drum (3), **characterized in that** at least one of the frame (2) and the drum (3) is provided with a plurality of sensing probes (10) for determining local deformation of the at least one of the frame (2) and the drum (3), which sensing probes (10) are located at different angular locations around the axis of rotation (X).

2. A winch (1) according to claim 1, wherein the sensing probes (10) are accommodated in a separate annular element (9).

3. A winch (1) according to claim 2, wherein the bearing comprises a roller bearing (5) including an inner ring and an outer ring.

4. A winch (1) according to claim 3, wherein the outer ring has a fixed position with respect to the frame (2) and the inner ring has a fixed position with respect to the drum (3) .

5. A winch (1) according to claim 4, wherein the annular element (9) is sandwiched between the outer ring of the roller bearing (5) and the frame (2).

6. A winch (1) according to any one of the preceding claims, wherein the sensing probes comprise strain gauges (10).

7. A winch (1) according to claim 6, wherein the sensing probes (10) comprise optical strain gauges (10).

8. A winch (1) according to claim 7, wherein the optical strain gauges (10) are integrated in an optical fibre.

9. A winch (1) according to any one of the preceding claims, wherein the sensing probes (10) are distributed evenly about the axis of rotation (X).

10. A winch (1) according to any one of the preceding claims, wherein the bearing (5) is a first bearing and the plurality of sensing probes (10) comprises a first series of sensing probes located at different angular locations around the axis of rotation (X) at the first bearing, wherein the drum (3) is mounted to the frame (2) through a second bearing which is located at a distance from the first bearing along the axis of rotation (X), wherein at least one of the frame (2) and the drum (3) is provided with a second series of sensing probes for determining local deformation of the at least one of the frame (2) and the drum (3), which second series of sensing probes are located at different angular locations about the axis of rotation (X) at the second bearing.

11. A winch (1) according to claim 10, wherein the first and second series of sensing probes (10) are similar and the first and second bearings (5) are similar.

12. A winch (1) according to any one of the preceding claims, wherein the brake comprises a friction band (6) which at least partly surrounds a circular cylindrical portion of the drum (3).

13. A winch (1) according to claim 12, wherein the friction band (6) is coupled to a rod (8) which in turn is coupled to the frame (2) so as to transfer a brake force from the friction band (6) to the frame (2) under operating conditions.
